# FASCICULE DE BREVET EUROPEEN

(11) **EP 0 500 167 B1**
(45) Date de publication et mention de la délivrance du brevet: **10.07.1996**
(21) Numéro de dépôt: 92200369.4
(22) Date de dépôt: 11.02.1992
(51) Int. Cl.: C08L 27/08

(54) **Compositions à base de copolymères du chlorure de vinylidène stabilisées à la chaleur et leur utilisation**
Hitzestabilisierte Zusammensetzungen auf Grundlage von Copolymeren des Vinylidenchlorids und ihre Verwendung
Heat stabilised compositions based on copolymers of vinylidene chloride and their use

(30) Priorité: 20.02.1991 BE 9100168
(43) Date de publication de la demande: 26.08.1992
(73) Titulaire: SOLVAY (Société Anonyme), B-1050 Bruxelles (BE)
(72) Inventeur: Michel, Claude, B-1300 Wavre (BE); Nagels, Pascale, B-1060 Bruxelles (BE); Francoisse, Patrick, F-39500 Tavaux (FR); Guenaire, Bernard, F-39500 Tavaux (FR)
(74) Mandataire: Marckx, Frieda

(56) Documents cités:
- EP-A- 0 053 354
- EP-A- 0 402 173

## Description

La présente invention concerne des compositions à base de copolymères du chlorure de vinylidène stabilisées à la chaleur et leur utilisation. Elle concerne plus particulièrement des compositions à base de copolymères du chlorure de vinylidène stabilisées à la chaleur à l'intervention de stabilisant époxyde et leur utilisation pour l'extrusion de films et de feuilles destinés à l'emballage.

Les copolymères du chlorure de vinylidène, usuellement désignés sous le vocable "PVDC", constituent des copolymères thermoplastiques imperméables bien connus comprenant 70 à 96 % en poids d'unités monomériques dérivées du chlorure de vinylidène, les comonomères essentiels étant habituellement constitués de chlorure de vinyle, d'esters et/ou de nitriles (méth)acryliques. Leur imperméabilité élevée, notamment à l'oxygène, en fait des matériaux de choix pour la fabrication de films et de feuilles destinés à l'emballage, en particulier, dans le domaine alimentaire.

Il est bien connu également que les PVDC souffrent d'une stabilité thermique déficiente et que leur stabilité thermique est d'autant plus faible que leur teneur en chlorure de vinylidène (et donc leur imperméabilité) est élevée. Il est donc indispensable de leur adjoindre des stabilisants thermiques efficaces avant toute opération de mise en oeuvre à l'état fondu, telle que l'extrusion.

On a déjà proposé de multiples stabilisants thermiques pour les PVDC, généralement du type "accepteurs d'acide". Parmi ceux-ci figurent des composés inorganiques, tels que l'oxyde de magnésium et les hydrotalcites. Ces composés présentent l'inconvénient de conduire à une opacification des objets façonnés en PVDC, de sorte que ces stabilisants inorganiques sont à proscrire dans toute application exigeant une transparence élevée.

Les composés époxydes constituent une autre famille connue de stabilisants thermiques efficaces des copolymères du chlorure de vinylidène qui ne présentent pas l'inconvénient précité. Parmi ceux-ci, les plus couramment recommandés sont les huiles époxydées, telles que l'huile de soja époxydée, et les résines époxydes, plus particulièrement les résines époxydes liquides contituées essentiellement d'éther diglycidylique du bisphénol A. Les huiles époxydées, telles que l'huile de soja époxydée, conviennent pour la stabilisation de compositions destinées au façonnage d'articles transparents. Toutefois, elles présentent l'inconvénient de réduire sérieusement l'imperméabilité des PVDC auxquels elles sont incorporées. Par ailleurs, l'utilisation des résines époxydes liquides du type précité pose problème dans certains pays en raison de réglementations et/ou de directives imposant des limites très sévères en matière de migration et de teneurs résiduelles en éther diglycidylique du bisphénol A. Le recours à des résines époxydes solides dérivées du bisphénol A, moins riches en groupements époxydes, pourrait éventuellement atténuer ces problèmes de migration, mais au détriment de l'efficacité sur le plan de la stabilisation thermique ou de l'imperméabilité en cas d'augmentation des doses de résine époxyde solide.

On a également déjà proposé d'améliorer la stabilité thermique des PVDC par incorporation de méthacrylate de glycidyle dans la structure des PVDC (stabilisation "interne"). Dans la demande de brevet allemand DE-A-25 22 769 au nom de KANTO DENKA KOGYO, on décrit la fabrication de PVDC à stabilité thermique améliorée par mise en oeuvre conjointe de 0,5 à 10 % en poids de méthacrylate de glycidyle à la copolymérisation en suspension aqueuse du chlorure de vinylidène et d'autres monomères vinyliques polymérisables. Dans le meilleur des cas, à supposer la mise en oeuvre au départ de la copolymérisation de 10 % en poids de méthacrylate de glycidyle et l'absence totale d'hydrolyse des groupements époxy en cours de copolymérisation, de tels copolymères contiendraient environ 1 % en poids d'oxygène oxirane, ce qui correspond à un indice époxy d'environ 0,06. Dans ce cas également l'amélioration de la stabilité thermique se fait au détriment de l'imperméabilité des PVDC.

La présente invention a pour but de procurer des compositions à base de copolymères du chlorure de vinylidène stabilisées à la chaleur à l'intervention de nouveaux stabilisants thermiques époxydes particulièrement efficaces qui ne présentent aucun des inconvénients précités.

A cet effet, l'invention concerne des compositions à base de copolymères du chlorure de vinylidène stabilisées à la chaleur à l'intervention de stabilisant époxyde, caractérisées en ce que le stabilisant époxyde est un polymère du méthacrylate de glycidyle dont l'indice époxy est égal à 0,3 au moins.

L'indice époxy, couramment utilisé pour caractériser des composés époxydes, représente le nombre de groupements époxydes contenu dans 100 g de polymère. La détermination de l'indice époxy s'effectue généralement par addition d'un halogénure d'hydrogène, le plus souvent du chlorure d'hydrogène, sur les groupements époxydes du composé époxydé dissous dans un solvant approprié, tel que le diméthylformamide. Différentes méthodes pour évaluer l'indice époxy sont décrites en détail dans l'ouvrage de H. Lee et K. Neville intitulé "Handbook of Epoxy Resins", Mc Graw-Hill Book Company, 1967, 4-14 à 4-21.

Par polymère du méthacrylate de glycidyle, ci-après désigné par le vocable polyMAG, on entend désigner aussi bien les homopolymères que les copolymères du MAG dont l'indice époxy est égal à 0,3 au moins et leurs mélanges. Quoique les homopolymères de MAG présentent l'efficacité la plus élevée sur le plan de la stabilité thermique, on donne la préférence aux copolymères du MAG étant donné qu'ils procurent généralement un meilleur compromis des points de vue stabilité thermique, transparence et imperméabilité. Les copolymères auxquels on donne la préférence sont ceux dont l'indice époxy est égal à 0,4 au moins, plus particulièrement à 0,45 au moins et plus particulièrement encore à 0,5 au moins. A titre d'exemples de comonomères du MAG utilisables, on peut citer notamment les halogénures vinyl(idén)iques, les (méth)acrylates d'alkyles, les nitriles (méth)acryliques et le styrène.

Parmi les halogénures vinyl(idén)iques, on donne la préférence aux chlorures et fluorures vinyl(idén)iques et plus particulièrement encore aux chlorures, tels que les chlorures de vinyle et de vinylidène et leurs mélanges. Un halogénure vinyl(idén)ique particulièrement préféré est le chlorure de vinylidène.

Parmi les (méth)acrylates d'alkyles, on donne la préférence à ceux dont les groupements alkyles ne contiennent pas plus de 10 atomes de carbone et, de préférence, pas plus de 5 atomes de carbone. A titre d'exemples de pareils esters (méth)acryliques préférés, on peut citer l'acrylate de méthyle et le méthacrylate de méthyle, l'acrylate d'éthyle et l'acrylate de n-butyle.

La teneur en polyMAG des compositions selon l'invention n'est pas véritablement critique, étant entendu que l'effet stabilisant sera proportionnel aux teneurs en polyMAG. Une teneur de 0,5 partie pour 100 parties en poids de PVDC (pcr) procure déjà une amélioration significative de la stabilité thermique. Néanmoins, on incorpore de préférence au moins 1 pcr de PMAG dans le PVDC et, par ailleurs, pas plus de 10 pcr. Des teneurs particulièrement préférées sont comprises entre environ 1,5 et 4,5 pcr.

Les polyMAG constituent des polymères connus en tant que tels. Ils peuvent être fabriqués par toute technique connue de polymérisation par voie radicalaire , tels que la polymérisation en émulsion ou en suspension aqueuse dans des conditions évitant l'ouverture (hydrolyse) des ponts époxy ou encore en solution organique dans un solvant aprotique, la préférence étant donnée à cette dernière technique qui assure dans tous les cas l'obtention de polymères à indice époxy élevé. A titre d'exemples de solvants utilisables, on peut citer les cétones, tels que la méthyléthylcétone et à titre d'exemples de catalyseurs, le peroxyde de benzoyle ou l'azobisisobutyronitrile.

Les polyMAG constituent des stabilisants thermiques efficaces de tous les copolymères du chlorure de vinylidène tels que définis plus haut et obtenus par n'importe quelle technique de copolymérisation du chlorure de vinylidène, telle que par exemple l'émulsion ou la suspension aqueuses. Ils conviennent tout particulièrement pour la stabilisation thermique des copolymères du chlorure de vinylidène avec des comonomères acryliques, tels que les esters et/ou les nitriles (méth)acryliques, et plus particulièrement encore, les esters acryliques.

Les compositions selon l'invention conviennent pour la fabrication par extrusion (en ce compris la coextrusion) d'articles façonnés très divers présentant un excellent compromis imperméabilité/transparence. Elles conviennent plus particulièrement pour l'extrusion (en ce compris la coextrusion) de films et de feuilles destinés à l'emballage, plus particulièrement encore à l'emballage alimentaire. L'utilisation des compositions selon l'invention pour l'extrusion (en ce compris la coextrusion) de films et de feuilles destinés à l'emballage constitue un autre aspect de l'invention.

Les exemples qui suivent illustrent les compositions selon l'invention et leur utilisation pour l'extrusion (en l'occurence, la coextrusion) de films.

Les exemples 1 à 8 concernent la stabilisation thermique d'un PVDC constitué d'un copolymère de chlorure de vinylidène et de chlorure de vinyle obtenu par mise en oeuvre à la copolymérisation en émulsion aqueuse de 70 parties en poids de chlorure de vinylidène avec 30 parties en poids de chlorure de vinyle.

Les exemples 9 à 12 concernent la stabilisation thermique d'un PVDC constitué d'un copolymère de chlorure de vinylidène et d'acrylate de méthyle obtenu par mise en oeuvre à la copolymérisation en suspension aqueuse de 94 parties en poids de chlorure de vinylidène avec 6 parties en poids d'acrylate de méthyle.

Dans les exemples 1 à 3 et 6 à 11, selon l'invention, on a mis en oeuvre 2 pcr de polyMAG, plus précisément :
- exemples 1 et 9 : homopolymère du MAG (PMAG) présentant un indice époxy égal à 0,650
- exemples 2 et 10 : copolymère obtenu par copolymérisation de 65 parties de MAG avec 35 parties en poids de chlorure de vinyle (MAG-VC₁) présentant un indice époxy égal à 0,525
- exemple 3 : copolymère obtenu par copolymérisation de 80 parties de MAG avec 10 parties de VC₂ et 10 parties en poids de VC1 (MAG-VC₁-VC₂) présentant un indice époxy égal à 0,572
- exemple 6 : copolymère obtenu par copolymérisation de 70 parties de MAG avec 30 parties en poids de méthacrylate de méthyle (MAG-MMA) présentant un indice époxy égal à 0,481
- exemple 7 : copolymère obtenu par copolymérisation de 70 parties de MAG avec 30 parties en poids d'acrylate d'éthyle (MAG-EA) présentant un indice époxy égal à 0,488
- exemple 8 : copolymère obtenu par copolymérisation de 70 parties de MAG avec 30 parties en poids d'acrylate de n-butyle (MAG-nBA) présentant un indice époxy égal à 0,488
- exemple 11 : copolymère obtenu par copolymérisation de 70 parties de MAG avec 30 parties en poids de chlorure de vinylidène (MAG-VC₂) présentant un indice époxy égal à 0,500. La nature et les quantités de polyMAG mis en oeuvre dans les exemples sont récapitulées dans le Tableau I en annexe. Dans les exemples 4, 5 et 12, donnés à titre comparatif, on a mis en oeuvre de l'huile de soja époxydée (HSE) dans les quantités précisées dans ledit Tableau I.

Les compositions selon l'invention (exemples 1 à 3 et 6 à 11) ont été préparées par mélange de 1500 g de PVDC avec 30 g de polyMAG dans un mélangeur rapide jusqu'à atteindre une température de 70°C, suivi d'un refroidissement jusqu'à la température ambiante.

Les compositions selon les exemples comparatifs 4, 5 et 12 ont été préparées par mélange de 1500 g de PVDC avec les quantités appropriées d'huile de soja époxydée préchauffée et introduite en cours de mélange à une température de 50°C, suivi d'un refroidissement jusqu'à la température ambiante.

La stabilité thermique à long terme (STLT) des compositions à été évaluée par malaxage des prémélanges dans un pétrin maintenu à 160°C pour les exemples 1 à 8 et à 180°C pour les exemples 9 à 12. Dans le Tableau I en annexe sont repris les résultats de l'évaluation de la stabilité thermique (STLT) traduite par le temps qui s'écoule avant que les prémélanges ne deviennent brun foncé.

La perméabilité à l'oxygène des compositions selon les exemples 1 à 12 a été mesurée sur un complexe coextrudé à trois couches comprenant une couche centrale en PVDC et deux couches extérieures en copolymère d'éthylène et d'acétate de vinyle contenant 91 % en poids d'éthylène (EVA) ayant chacune une épaisseur de 30 µm. Ces structures ont été réalisées sur une installation de coextrusion comprenant deux extrudeuses monovis, un bloc d'alimentation et une filière plate dans les conditions thermiques suivantes :
- températures des première et dernière zones de l'extrudeuse PVDC (monovis) : 10°C en-dessous, respectivement 10°C au-dessus de la température de fusion du PVDC (température de fusion du PVDC mis en oeuvre dans les exemples 1 à 8 : environ 140°C et de celui mis en oeuvre dans les exemples 9 à 12 : 160-165°C).
- température d'extrusion de l'EVA : 170°C
- température du bloc d'alimentation et de la filière : 170°C
- le film coextrudé est refroidi sur un rouleau maintenu à 22°C (absence d'orientation).
La perméabilité à l'oxygène (PO₂) des complexes coextrudés (à 25°C sous une humidité relative (HR) de 85 %) a été évaluée sur un appareil de marque déposée OXTRAN ^{R} 1000-H System de la firme MOCON (USA). Les résultats de cette évaluation figurent au Tableau I en annexe. Ils sont rapportés en cm³ d'oxygène par m² de film, bar et µm d'épaisseur de PVDC.

La transparence des compositions selon les exemples 9 à 12 est évaluée sur des languettes d'une épaisseur de 0,5 à 1,5 mm extrudées au travers d'une filière de 40 x 1 mm à une température égale à 165°C. La transparence est évaluée par mesure photoélectrique de la transmission lumineuse au travers des languettes, les résultats obtenus, repris au Tableau I, étant exprimés en µA rapportés à un mm d'épaisseur.

Les données relatives à la composition et les résultats d'évaluation des compositions selon les exemples 1 à 12 sont consignées dans le Tableau I en annexe.

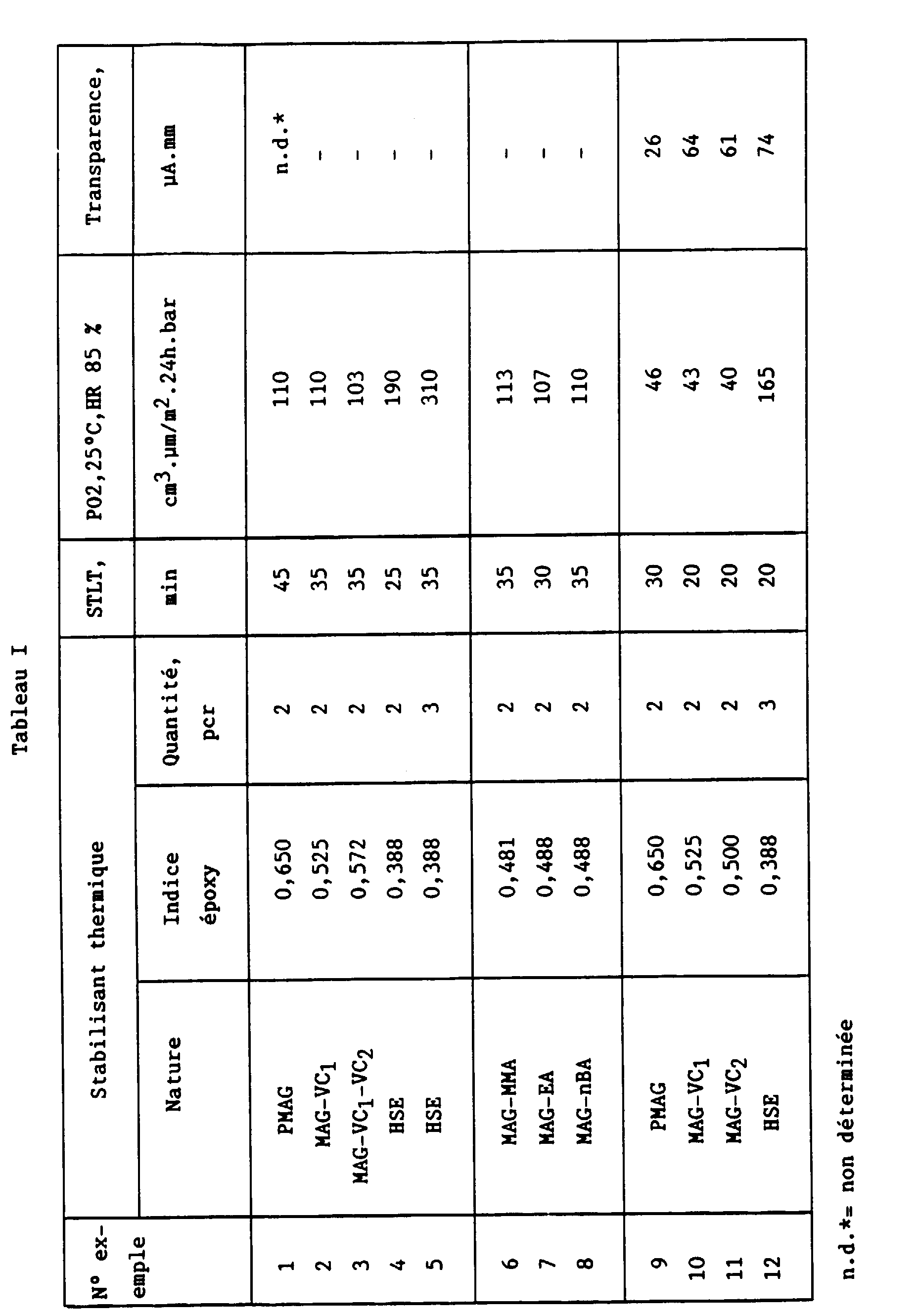

## Revendications (Revendications pour l'(les) Etat(s) contractant(s) suivant(s): AT, BE, CH, LI, DE, DK, FR, GB, GR, IT, LU, NL, PT, SE)

1. Compositions à base de copolymères du chlorure de vinylidène comprenant 70 à 96 % en poids d'unités monomériques dérivées du chlorure de vinylidène stabilisées à la chaleur à l'intervention de stabilisant époxyde, caractérisées en ce que le stabilisant époxyde est un polymère du méthacrylate de glycidyle dont l'indice époxy est égal à 0,3 au moins.

2. Compositions à base de copolymères du chlorure de vinylidène selon la revendication 1, caractérisées en ce que le polymère du méthacrylate de glycidyle est choisi parmi les copolymères du méthacrylate de glycidyle dont l'indice époxy est égal à 0,4 au moins.

3. Compositions à base de copolymères du chlorure de vinylidène selon la revendication 2, caractérisées en ce que l'indice époxy des copolymères du méthacrylate de glycidyle est égal à 0,45 au moins.

4. Compositions à base de copolymères du chlorure de vinylidène selon la revendication 2, caractérisées en ce les copolymères du méthacrylate de glycidyle comprennent à titre de comonomères au moins un comonomère choisi parmi les halogénures vinyliques et vinylidéniques.

5. Compositions à base de copolymères du chlorure de vinylidène selon la revendication 4, caractérisées en ce que les halogénures vinyliques et vinylidéniques sont des chlorures.

6. Compositions à base de copolymères du chlorure de vinylidène selon la revendication 2, caractérisées en ce que les copolymères de méthacrylate de glycidyle comprennent à titre de comonomères au moins un comonomère choisi parmi les (méth)acrylates d'alkyles, les nitriles (méth)acryliques et le styrène.

7. Compositions à base de copolymères du chlorure de vinylidène selon la revendication 1, caractérisées en ce qu'elles comprennent au moins 0,5 partie et pas plus de 10 parties de polymère de méthacrylate de glycidyle pour 100 parties en poids de copolymère du chlorure de vinylidène.

8. Compositions à base de chlorure de vinylidène selon la revendication 7, caractérisées en ce qu'elles comprennent de 1,5 à 4,5 parties de polymère du méthacrylate de glycidyle pour 100 parties en poids de copolymère du chlorure de vinylidène.

9. Utilisation des compositions selon l'une quelconque des revendications 1 à 8 pour l'extrusion de films et de feuilles destinés à l'emballage.

## Revendications (Revendications pour l'(les) Etat(s) contractant(s) suivant(s): ES)

1. Procédé pour la fabrication de films et de feuilles destinés à l'emballage par extrusion d'une composition à base de copolymères du chlorure de vinylidène comprenant 70 à 96 % en poids d'unités monomériques dérivées du chlorure de vinylidène stabilisée à la chaleur à l'intervention de stabilisant époxyde, caractérisé en ce qu'on extrude une composition contenant à titre de stabilisant époxyde un polymère du méthacrylate de glycidyle dont l'indice époxy est égal à 0,3 au moins.

2. Procédé pour la fabrication de films et de feuilles par extrusion d'une composition à base de copolymères du chlorure de vinylidène selon la revendication 1, caractérisé en ce que le polymère du méthacrylate de glycidyle est choisi parmi les copolymères du méthacrylate de glycidyle dont l'indice époxy est égal à 0,4 au moins.

3. Procédé pour la fabrication de films et de feuilles par extrusion d'une composition à base de copolymères du chlorure de vinylidène selon la revendication 2, caractérisé en ce que l'indice époxy des copolymères du méthacrylate de glycidyle est égal à 0,45 au moins.

4. Procédé pour la fabrication de films et de feuilles par extrusion d'une composition à base de copolymères du chlorure de vinylidène selon la revendication 2, caractérisé en ce les copolymères du méthacrylate de glycidyle comprennent à titre de comonomères au moins un comonomère choisi parmi les halogénures vinyliques et vinylidéniques.

5. Procédé pour la fabrication de films et de feuilles par extrusion d'une composition à base de copolymères du chlorure de vinylidène selon la revendication 4, caractérisé en ce que les halogénures vinyliques et vinylidéniques sont des chlorures.

6. Procédé pour la fabrication de films et de feuilles par extrusion d'une composition à base de copolymères du chlorure de vinylidène selon la revendication 2, caractérisé en ce que les copolymères de méthacrylate de glycidyle comprennent à titre de comonomères au moins un comonomère choisi parmi les (méth)acrylates d'alkyles, les nitriles (méth)acryliques et le styrène.

7. Procédé pour la fabrication de films et de feuilles par extrusion d'une composition à base de copolymères du chlorure de vinylidène selon la revendication 1, caractérisé en ce que la composition comprend au moins 0,5 partie et pas plus de 10 parties de polymère de méthacrylate de glycidyle pour 100 parties en poids de copolymère du chlorure de vinylidène.

8. Procédé pour la fabrication de films et de feuilles par extrusion d'une composition à base de chlorure de vinylidène selon la revendication 7, caractérisé en ce que la composition comprend de 1,5 à 4,5 parties de polymère du méthacrylate de glycidyle pour 100 parties en poids de copolymère du chlorure de vinylidène.

## Claims (Claims for the following Contracting State(s): AT, BE, CH, LI, DE, DK, FR, GB, GR, IT, LU, NL, PT, SE)

1. Compositions based on vinylidene chloride copolymers containing 70 to 96 % by weight of monomer units derived from vinylidene chloride stabilised against heat by the use of an epoxide stabiliser, characterised in that the epoxide stabiliser is a glycidyl methacrylate polymer whose expoxy value is equal to at least 0.3.

2. Compositions based on vinylidene chloride copolymers according to Claim 1, characterised in that the glycidyl methacrylate polymer is chosen from glycidyl methacrylate copolymers whose epoxy value is equal to at least 0.4.

3. Compositions based on vinylidene chloride copolymers according to Claim 2, characterised in that the epoxy value of the glycidyl methacrylate copolymers is equal to at least 0.45.

4. Compositions based on vinylidene chloride copolymers according to Claim 2, characterised in that the glycidyl methacrylate copolymers include by way of comonomers at least one comonomer chosen from vinyl and vinylidene halides.

5. Compositions based on vinylidene chloride copolymers according to Claim 4, characterised in that the vinyl and vinylidene halides are chlorides.

6. Compositions based on vinylidene chloride copolymers according to Claim 2, characterised in that the glycidyl methacrylate copolymers include by way of comonomers at least one comonomer chosen from alkyl (meth)acrylates, (meth)acrylonitriles and styrene.

7. Compositions based on vinylidene chloride copolymers according to Claim 1, characterised in that they contain at least 0.5 parts and not more than 10 parts of glycidyl methacrylate polymer per 100 parts by weight of vinylidene chloride copolymers.

8. Compositions based on vinylidene chloride according to Claim 7, characterised in that they contain from 1.5 to 4.5 parts of glycidyl methacrylate polymer per 100 parts by weight of vinylidene chloride copolymer.

9. Use of the compositions according to any one or Claims 1 to 8 for the extrusion of films and sheets intended for packaging.

## Claims (Claims for the following Contracting State(s): ES)

1. Process for the manufacture of films and sheets intended for packaging by extrusion of a composition based on vinylidene chloride copolymers containing 70 to 96 % by weight of monomer units derived from vinylidene chloride stabilised against heat by the use of an epoxide stabiliser, characterised in that one extrudes a composition containing by way of epoxide stabiliser a glycidyl methacrylate polymer whose epoxy value is equal to at least 0.3.

2. Process for the manufacture of films and sheets by extrusion of a composition based on vinylidene chloride copolymers according to Claim 1, characterised in that the glycidyl methacrylate polymer is chosen from glycidyl methacrylate copolymers whose epoxy value is equal to at least 0.4.

3. Process for the manufacture of films and sheets by extrusion of a composition based on vinylidene chloride copolymers according to Claim 2, characterised in that the epoxy value of the glycidyl methacrylate copolymers is equal to at least 0.45.

4. Process for the manufacture of films and sheets by extrusion of a composition based on vinylidene chloride copolymers according to Claim 2, characterised in that the glycidyl methacrylate copolymers include by way of comonomers at least one comonomer chosen from vinyl and vinylidene halides.

5. Process for the manufacture of films and sheets by extrusion of a composition based on vinylidene chloride copolymers according to Claim 4, characterised in that the vinyl and vinylidene halides are chlorides.

6. Process for the manufacture of films and sheets by extrusion of a composition based on vinylidene chloride copolymers according to Claim 2, characterised in that the glycidyl methacrylate copolymers include by way of comonomers at least one comonomer chosen from alkyl (meth)acrylates, (meth)acrylonitriles and styrene.

7. Process for the manufacture of films and sheets by extrusion of a composition based on vinylidene chloride copolymers according to Claim 1, characterised in that they contain at least 0.5 parts and not more than 10 parts of glycidyl methacrylate polymers per 100 parts by weight of vinylidene chloride copolymers.

8. Process for the manufacture of films and sheets by extrusion of a composition based on vinylidene chloride copolymers according to Claim 7, characterised in that they contain form 1.5 to 4.5 parts of glycidyl methacrylate polymer per 100 parts by weight of vinylidene chloride copolymer.

## Patentansprüche (Patentansprüche für folgende(n) Vertragsstaat(en): AT, BE, CH, LI, DE, DK, FR, GB, GR, IT, LU, NL, PT, SE)

1. Unter der Beteiligung eines Epoxidstabilisators wärmestabilisierte Zusammensetzungen auf der Basis von Vinylidenchloridcopolymeren, die 70 bis 96 Gew.-% von Vinylidenchlorid abgeleitete Monomereinheiten enthalten, dadurch gekennzeichnet, daß der Epoxidstabilisator ein Glycidylmethacrylatpolymer ist, dessen Epoxyzahl wenigstens gleich 0,3 ist.

2. Zusammensetzungen auf der Basis von Vinylidenchloridcopolymeren gemäß Anspruch 1, dadurch gekennzeichnet, daß das Glycidylmethacrylatpolymer unter den Glycidylmethacrylatcopolymeren ausgewählt ist, deren Epoxyzahl wenigstens gleich 0,4 ist.

3. Zusammensetzungen auf der Basis von Vinylidenchloridcopolymeren gemäß Anspruch 2, dadurch gekennzeichnet, daß die Epoxyzahl der Glycidylmethacrylatcopolymere wenigstens gleich 0,45 ist.

4. Zusammensetzungen auf der Basis von Vinylidenchloridcopolymeren gemäß Anspruch 2, dadurch gekennzeichnet, daß die Glycidylmethacrylatcopolymere als Comonomere wenigstens ein unter den Vinyl- und Vinylidenhalogeniden ausgewähltes Comonomer enthalten.

5. Zusammensetzungen auf der Basis von Vinylidenchloridcopolymeren gemäß Anspruch 4, dadurch gekennzeichnet, daß die Vinyl- und Vinylidenhalogenide Chloride sind.

6. Zusammensetzungen auf der Basis von Vinylidenchloridcopolymeren gemäß Anspruch 2, dadurch gekennzeichnet, daß die Glycidylmethacrylatcopolymere als Comonomere wenigstens ein unter den Alkyl(meth)acrylaten, den (Meth)acrylnitrilen und Styrol ausgewähltes Comonomer enthalten.

7. Zusammensetzungen auf der Basis von Vinylidenchloridcopolymeren gemäß Anspruch 1, dadurch gekennzeichnet, daß sie wenigstens 0,5 Teil und nicht mehr als 10 Teile Glycidylmethacrylatpolymer pro 100 Gewichtsteile Vinylidenchloridcopolymer enthalten.

8. Zusammensetzungen auf der Basis von Vinylidenchlorid gemäß Anspruch 7, dadurch gekennzeichnet, daß sie 1,5 bis 4,5 Teile Glycidylmethacrylatpolymer pro 100 Gewichtsteile Vinylidenchloridcopolymer enthalten.

9. Verwendung der Zusammensetzungen gemäß einem der Ansprüche 1 bis 8 zur Extrusion von Filmen und Folien, die zur Verpackung bestimmt sind.

## Patentansprüche (Patentansprüche für folgende(n) Vertragsstaat(en): ES)

1. Verfahren zur Herstellung von Filmen und Folien, die zur Verpackung bestimmt sind, durch Extrusion einer unter der Beteiligung eines Epoxidstabilisators wärmestabilisierten Zusammensetzung auf der Basis von Vinylidenchloridcopolymeren, die 70 bis 96 Gew.-% von Vinylidenchlorid abgeleitete Monomereinheiten enthält, dadurch gekennzeichnet, daß man eine Zusammensetzung extrudiert, die als Epoxidstabilisator ein Glycidylmethacrylatpolymer enthält, dessen Epoxyzahl wenigstens gleich 0,3 ist.

2. Verfahren zur Herstellung von Filmen und Folien durch Extrusion einer Zusammensetzung auf der Basis von Vinylidenchloridcopolymeren gemäß Anspruch 1, dadurch gekennzeichnet, daß das Glycidylmethacrylatpolymer unter den Glycidylmethacrylatcopolymeren ausgewählt ist, deren Epoxyzahl wenigstens gleich 0,4 ist.

3. Verfahren zur Herstellung von Filmen und Folien durch Extrusion einer Zusammensetzung auf der Basis von Vinylidenchloridcopolymeren gemäß Anspruch 2, dadurch gekennzeichnet, daß die Epoxyzahl der Glycidylmethacrylatcopolymere wenigstens gleich 0,45 ist.

4. Verfahren zur Herstellung von Filmen und Folien durch Extrusion einer Zusammensetzung auf der Basis von Vinylidenchloridcopolymeren gemäß Anspruch 2, dadurch gekennzeichnet, daß die Glycidylmethacrylatcopolymere als Comonomere wenigstens ein unter den Vinyl- und Vinylidenhalogeniden ausgewähltes Comonomer enthalten.

5. Verfahren zur Herstellung von Filmen und Folien durch Extrusion einer Zusammensetzung auf der Basis von Vinylidenchloridcopolymeren gemäß Anspruch 4, dadurch gekennzeichnet, daß die Vinyl- und Vinylidenhalogenide Chloride sind.

6. Verfahren zur Herstellung von Filmen und Folien durch Extrusion einer Zusammensetzung auf der Basis von Vinylidenchloridcopolymeren gemäß Anspruch 2, dadurch gekennzeichnet, daß die Glycidylmethacrylatcopolymere als Comonomere wenigstens ein unter den Alkyl(meth)acrylaten, den (Meth)acrylnitrilen und Styrol ausgewähltes Comonomer enthalten.

7. Verfahren zur Herstellung von Filmen und Folien durch Extrusion einer Zusammensetzung auf der Basis von Vinylidenchloridcopolymeren gemäß Anspruch 1 dadurch gekennzeichnet, daß die Zusammensetzung wenigstens 0,5 Teil und nicht mehr als 10 Teile Glycidylmethacrylatpolymer pro 100 Gewichtsteile Vinylidenchloridcopolymer enthält.

8. Verfahren zur Herstellung von Filmen und Folien durch Extrusion einer Zusammensetzung auf der Basis von Vinylidenchlorid gemäß Anspruch 7, dadurch gekennzeichnet, daß die Zusammensetzung 1,5 bis 4,5 Teile Glycidylmethacrylatpolymer pro 100 Gewichtsteile Vinylidenchloridcopolymer enthält.
